# EUROPÄISCHE PATENTANMELDUNG

(11) **EP 2 295 931 A1**
(43) Veröffentlichungstag der Anmeldung: **16.03.2011**
(21) Anmeldenummer: 10009133.9
(22) Anmeldetag: 02.09.2010
(51) Int. Cl.: G01B 11/24

(54) **Vorrichtung und Verfahren zum Vermessen der Form eines Gegenstands**

(30) Priorität: 02.09.2009 DE 102009039657
(71) Anmelder: MSG Maschinenbau GmbH, 57392 Schmallenberg (DE)
(72) Erfinder: Kavousian, Arshad, 57319 Bad Berleburg (DE)
(74) Vertreter: Tilmann, Max Wilhelm

(57) **Zusammenfassung**

Eine Vorrichtung zum Vermessen der Form eines Gegenstands weist mindestens zwei Lichtquellen, die nacheinander aktiviert werden, um den Gegenstand zu beleuchten, und die sich bei ihrer Aktivierung in unterschiedlichen Relativpositionen zu dem Gegenstand befinden, mindestens eine optische Detektionseinrichtung zum Erfassen der durch die Beleuchtung des Gegenstands erzeugten Schattenbilder und eine Rechnereinheit zum Berechnen der Form des Gegenstands aus den von der Detektionseinrichtung erfassten Schattenbildern auf.

## Beschreibung

Die Erfindung betrifft eine Vorrichtung sowie ein Verfahren zum Vermessen der Form eines Gegenstands.

In vielen technischen Bereichen ist es erforderlich, die äußere Form von dreidimensionalen Gegenständen automatisch, schnell und gegebenenfalls berührungslos zu vermessen. Beispielsweise bei der Herstellung von Rohrteilen, die bei der Herstellung von Kraftfahrzeugen für die Auspuff- und Bremssysteme eingesetzt werden, kann ein solches Vermessen der Rohre, die häufig komplex und unregelmäßig gebogen sind, aus Qualitätssicherungsgründen erforderlich sein. Dabei müssen die genauen Abmessungen der Rohre, die Torsionswinkel, die Biegungswinkel zwischen einzelnen Abschnitten der Rohre und die Länge dieser Abschnitte für die Qualitätskontrolle und zum Zwecke der Maschineneinstellung bekannt sein.

Es wurden verschiedene taktile Messverfahren entwickelt, bei denen die Form der zu vermessenden Rohre dadurch ermittelt wird, dass diese über ihre gesamte Länge mittels eines an einem Messarm angeordneten Sensors abgefahren werden und aus der dreidimensionalen Bewegung des Sensors im Raum die Form des abgetasteten Rohres ermittelt wird. Die dabei zum Einsatz kommenden Vorrichtungen sind insbesondere aufgrund der notwendigen Spielfreiheit der Gelenke des Messarms mit einem hohen konstruktiven Aufwand verbunden. Zudem ist, da das gebogene Rohr in seiner gesamten Länge mittels des Sensors abgefahren werden muss, die Durchführung eines solchen Messverfahrens mit einem erheblichen Zeitaufwand verbunden. Bei bestimmten zu vermessenden Gegenständen können zudem taktile Messverfahren nicht zur Anwendung kommen, da der Gegenstand durch den Kontakt mit dem Sensor und durch die notwendige Einspannung in einer Haltevorrichtung verformt wird, wodurch diese gegebenenfalls beschädigt und die Messergebnisse verfälscht werden können.

Diese Nachteile haben zu der Entwicklung optischer Messverfahren geführt. Diese ermöglichen, die dreidimensionale Form eines Gegenstands, beispielsweise eines gebogenen Rohrs, schnell und berührungslos zu ermitteln. Ein solches Verfahren sowie eine entsprechende Vorrichtung sind beispielsweise in der EP 0 524 479 A1 offenbart. Bei diesem Verfahren ist vorgesehen, eine dreidimensional gebogene Leitung, deren Form zu vermessen ist, auf einer elastischen Unterlage, die aus einer Vielzahl von zu einem Netz verspannten, elastischen Gummibändern ausgebildet ist, zu lagern, die Leitung von unten durch die Unterlage zu belichten und den Lichteinfall mittels mehrerer oberhalb der Leitung angeordneter CCD-Kameras zu erfassen. Aus den einzelnen Bildern der CCD-Kameras, die in unterschiedlichen Relativpositionen bezüglich der Leitung angeordnet sind, kann rechnerisch die dreidimensionale Form der Leitung ermittelt werden. Gegenüber den bekannten taktilen Verfahren ist das optische Messverfahren gemäß der EP 0 524 479 A1 mit einem erheblich geringeren Zeitaufwand verbunden, der sich im wesentlichen ausschließlich aus der Berechnungszeit ergibt, die erforderlich ist, die Einzelbilder der CCD-Kameras in ein dreidimensionales Modell der Leitung umzurechnen. Ein wesentlicher Nachteil des in der EP 0 524 479 A1 offenbarten Verfahrens liegt jedoch in einem hohen finanziellen Aufwand für die Vorrichtung, der insbesondere in der Verwendung einer Vielzahl von CCD-Kameras begründet ist.

Ausgehend von diesem Stand der Technik lag der Erfindung die Aufgabe zugrunde, eine gegenüber dem Stand der Technik verbesserte Vorrichtung zum Vermessen der Form eines Gegenstands sowie ein entsprechendes Verfahren anzugeben. Insbesondere sollte ermöglicht werden, die dreidimensionale Form eines Gegenstands schnell und unter relativ geringem finanziellem Aufwand bestimmen zu können.

Diese Aufgabe wird durch eine Vorrichtung gemäß Patentanspruch 1 sowie ein Verfahren gemäß Patentanspruch 11 gelöst. Vorteilhafte Ausführungsformen sind Gegenstand der jeweiligen abhängigen Patentansprüche und ergeben sich aus der nachfolgenden Beschreibung der Erfindung.

Der Kern der Erfindung liegt darin, anstelle einer Vielzahl von optischen Detektionseinrichtungen, wie dies in der EP 0 524 479 A1 offenbart ist, möglichst wenige und insbesondere nur eine optische Detektionseinrichtung zu verwenden. Da mittels einer einzelnen optischen Detektionseinrichtung jedoch lediglich eine ebene Projektion des dreidimensional geformten, zu vermessenden Gegenstands ermittelt werden kann, ist weiterhin vorgesehen, mindestens zwei Lichtquellen vorzusehen, die in unterschiedlichen Relativpositionen zu dem Gegenstand und der Detektionseinrichtung angeordnet sind. Die unterschiedlichen Lichtquellen erzeugen jeweils ein spezifisches Schattenbild des beleuchteten Gegenstands, das von der Detektionseinrichtung erfasst werden kann, so dass durch eine rechnerische Kombination der einzelnen Schattenbilder die dreidimensionale Form des Gegenstands ermittelt werden kann. Um dabei exakt definierte Schattenbilder zu erzeugen, die den einzelnen Lichtquellen, deren Position relativ zu der Kamera bekannt ist, eindeutig zugeordnet werden können, ist erfindungsgemäß weiterhin vorgesehen, die zumindest zwei Lichtquellen nacheinander zu aktivieren, so dass es nicht zu einer Überschneidung der einzelnen Schattenbilder kommt.

Mit dem erfindungsgemäßen Verfahren und der erfindungsgemäßen Vorrichtung wird es somit möglich, mit den Detektionen der zweidimensionalen Schattenbilder, vorzugsweise allein durch Detektieren der zweidimensionalen Schattenbilder und Auswertung dieser erfassten zweidimensionalen Schattenbilder, die dreidimensionale Form des Gegenstands zu berechnen.

Eine erfindungsgemäße Vorrichtung zum Vermessen der Form eines Gegenstands weist demnach mindestens zwei Lichtquellen auf, die nacheinander aktiviert werden, um den Gegenstand zu beleuchten, und die sich bei ihrer Aktivierung in unterschiedlichen Relativpositionen zu dem Gegenstand befinden, weiterhin mindestens eine optische Detektionseinrichtung zum Erfassen der durch die Beleuchtung des Gegenstands erzeugten Schattenbilder und eine Rechnereinheit zum Berechnen der Form des Gegenstands ausgehend von den von der Detektionseinrichtung erfassten Schattenbildern.

Bei dem entsprechenden erfindungsgemäßen Verfahren zum Vermessen der Form eines Gegenstands wird der Gegenstand nacheinander von mindestens zwei Lichtquellen, die sich in unterschiedlichen Relativpositionen zu dem Gegenstand befinden, beleuchtet, um die sich dadurch ergebenden Schattenbilder mittels mindestens einer optischen Detektionseinrichtung zu erfassen und daraus die Form des Gegenstands zu berechnen.

Ein Vorhandensein von mindestens zwei Lichtquellen, die nacheinander aktiviert werden und die sich bei ihrer Aktivierung in unterschiedlichen Relativpositionen zum Gegenstand befinden, setzt erfindungsgemäß nicht voraus, dass tatsächlich mindestens zwei Beleuchtungsmittel vorgesehen sind. Vielmehr kann beispielsweise auch ein Beleuchtungsmittel vorgesehen sein, das zwischen zwei oder mehreren Positionen relativ zu dem zu vermessenden Gegenstand bzw. der Detektionseinrichtung verfahrbar ist und in diesen unterschiedlichen Positionen (nacheinander) aktiviert wird, um den Gegenstand aus unterschiedlichen Richtungen zu beleuchten. Eine alternative Möglichkeit zur Erzeugung von zwei nacheinander aktivierbaren Lichtquellen kann darin bestehen, ein beispielsweise flächig leuchtendes Beleuchtungsmittel gegenüber dem Gegenstand bzw. der Detektionseinrichtung abzuschirmen und die Abschirmung, beispielsweise mittels einer verfahrbaren Abdeckung oder mehreren Blenden, nacheinander an verschiedenen Stellen aufzuheben,

Bevorzugt ist jedoch vorgesehen, zur Ausbildung der mindestens zwei Lichtquellen mehrere Beleuchtungsmittel vorzusehen, die zudem fest an definierten Relativpositionen bezüglich des Gegenstands und/oder der Detektionseinrichtung angeordnet sind.

Grundsätzlich kann durch eine Erhöhung der Anzahl der Lichtquellen auch die Messgenauigkeit der Vorrichtung erhöht werden, so dass vorzugsweise vorgesehen sein kann, mehr als zwei und insbesondere eine Vielzahl, wie beispielsweise 4 bis 16 Lichtquellen (oder noch mehr, beispielsweise auch 32 Lichtquellen oder mehr) vorzusehen. Die konkrete Auswahl der Anzahl der Lichtquellen kann insbesondere von der gewünschten Messgenauigkeit und/oder dem für die Herstellung der Vorrichtung vorgesehenen Kostenrahmen abhängen.

In einer bevorzugten Ausführungsform sind die Lichtquellen punktförmige Lichtquellen.

In einer bevorzugten Ausführungsform der erfindungsgemäßen Vorrichtung kann vorgesehen sein, die Lichtquellen einerseits und die Detektionseinrichtung andererseits auf gegenüberliegenden Seiten des Gegenstands anzuordnen, so dass die durch die Beleuchtung des Gegenstands erzeugten Schattenbilder nicht von dem Gegenstand (teilweise) verdeckt werden.

Es ist jedoch auch möglich, die Lichtquellen und die Detektionseinrichtung auf derselben Seite von dem Gegenstand anzuordnen und die sich an einer Projektionsfläche (z.B. einer weißen Fläche), die auf der gegenüberliegenden Seite von dem Gegenstand angeordnet ist, abbildenden Schattenbilder zu erfassen und auszuwerten. Eine (aus Sicht der Detektionseinrichtung) teilweise Verdeckung der Schattenbilder durch den Gegenstand selbst kann dann gegebenenfalls durch eine Erhöhung der Zahl der Lichtquellen und/oder der Detektionseinrichtungen kompensiert werden. Diese Ausführungsform eignet sich insbesondere für große und/oder schwere Gegenstände.

In einer besonders bevorzugten Ausführungsform der erfindungsgemäßen Vorrichtung ist vorgesehen, dass dann, wenn die Lichtquellen und die Detektionseinrichtung auf gegenüberliegenden Seiten von dem Gegenstand angeordnet sind, eine optisch teiltransparente Projektionsfläche zwischen dem Gegenstand und der Detektionseinrichtung angeordnet ist, auf die die Schattenbilder projiziert werden. Je näher die Projektionsfläche dem zu vermessenden Gegenstand angenähert ist, desto kleiner und schärfer wird das Schattenbild, das sich auf der Projektionsfläche abbildet. Ein kleines Schattenbild ermöglicht die Verwendung einer optischen Detektionseinrichtung mit einem relativ kleinen optischen Erfassungsfeld, wodurch wiederum die Herstellungskosten der erfindungsgemäßen Vorrichtung reduziert werden können. Eine höhere Schärfe des Schattenbilds kann die Messgenauigkeit verbessern.

Unter einer "optisch teiltransparenten Projektionsfläche" wird eine Projektionsfläche verstanden, bei der über eine Beleuchtung eines Gegenstands mit Licht von einer Seite der Projektionsfläche ein Schattenbild in der Projektionsfläche erzeugt wird, das von der entsprechenden anderen Seite der Projektionsfläche sichtbar ist. Beispielsweise eignet sich Milchglas zur Erzeugung einer optisch teiltransparenten Projektionsfläche.

Die teiltransparente Projektionsfläche kann erfindungsgemäß eben oder in beliebiger Weise gekrümmt oder abgewinkelt ausgebildet sein. Die konkrete Ausgestaltung der Projektionsfläche kann von dem jeweiligen Anwendungsfall und insbesondere von der Komplexität der Form des zu vermessenden Gegenstands abhängen. Eine aus verschiedenen Teilflächen bestehende Projektionsfläche, bei der die Teilflächen in einem Winkel zueinander ausgerichtet sind, kann vorzugsweise mit mehreren Detektionseinrichtungen verwendet werden, wobei jede der Detektionseinrichtungen einer definierten Teilfläche zugeordnet sein kann.

In einer weiterhin bevorzugten Ausführungsform kann vorgesehen sein, die Projektionsfläche als Ablage für den Gegenstand zu nutzen. Dadurch kann zum einen auf eine zusätzliche Halterungsvorrichtung für den Gegenstand verzichtet werden. Zum anderen wird durch die Ablage des Gegenstands auf der Projektionsfläche ein möglichst geringer Abstand zwischen dem Gegenstand und der Projektionsfläche erhalten, was mit den bereits genannten Vorteilen verbunden sein kann.

Gegebenenfalls kann es durch das Ablegen des Gegenstands auf einer Ablage, wie beispielsweise der Projektionsfläche, zu einer Verformung der Ablage bzw, der Projektionsfläche und/oder des Gegenstands kommen. Diese Verformung könnte das Messergebnis verfälschen, so dass in einer vorgesehen sein kann, dass die Rechnereinheit Softwaremittel umfasst, die anhand des Gewichts des Gegenstands (dieses kann zuvor bestimmt und in die Rechnereinheit eingegeben werden) die Verformung der Ablage und/oder des Gegenstands bestimmen (beispielsweise mittels bekannter Finite-Elemente-Berechnungsmethoden (FEM)), um diese bei der Berechnung der Form des (unbelasteten) Gegenstands als Korrekturfaktor zu berücksichtigen. Inwieweit das Aufliegen des Gegenstands auf der Ablage zu einer relevanten Verformung des Gegenstands selbst oder der Ablage führt, hängt insbesondere von der Größe des Gegenstands sowie von den für den Gegenstand selbst und die Ablage verwendeten Werkstoffen ab. Weiterhin kann von der erforderlichen Messgenauigkeit abhängigen, ob die Verformung des Gegenstands und/oder der Ablage als Korrekturfaktor bei der Berechnung der Form des Gegenstands berücksichtigt werden sollte.

In einer weiterhin bevorzugten Ausführungsform der erfindungsgemäßen Messvorrichtung kann vorgesehen sein, diese als Messzelle auszubilden, wobei eine Ablage für den Gegenstand zentral innerhalb der Messzelle angeordnet ist und die Detektionseinrichtung entweder unterhalb oder oberhalb der Ablage und die Lichtquellen auf der entsprechend gegenüberliegenden Seite angeordnet sind.

Besonders bevorzugt können eine Vielzahl von Lichtquellen an definierten Positionen an einer Decke (bzw. einem Boden) und/oder an Seitenwänden eines Gehäuses der Messzelle angeordnet sein.

Als Lichtquellen können vorzugsweise LED-Leuchten eingesetzt werden, die sich durch ein schnelles Ansprechverhalten, eine hohe Beleuchtungsstärke und einen geringen Energieverbrauch auszeichnen. Weiterhin weisen LED-Leuchten den wesentlichen Vorteil auf, dass diese eine relativ punktförmige Lichtquelle darstellen. Die Verwendung von punktförmigen Lichtquellen führt zu einem scharfen Schattenbild, wodurch wiederum die Messgenauigkeit verbessert werden kann.

Die erfindungsgemäße Vorrichtung ermöglicht die Verwendung einer einfachen optischen Detektionseinrichtung, wie beispielsweise einer handelsüblichen Foto- oder Videokamera, da diese lediglich ein auf gegebenenfalls einer optisch teiltransparenten Projektionsfläche erzeugtes Schattenbild erfassen muss. Es können insbesondere auch Kameras mit geringer Tiefenschärfe eingesetzt werden, wodurch die Anforderungen an die einzusetzende Optik reduziert werden. Die Verwendung aufwendiger CCD-Kameras, wie dies im Stand der Technik vorgesehen ist, ist daher nicht erforderlich. Dadurch können wiederum die Kosten zur Herstellung der erfindungsgemäßen Vorrichtung reduziert werden. Allerdings kann in einer bevorzugten Ausführungsform eine CCO-Kamera, insbesondere eine CCD-Kamera mit einfacher Optik und damit geringer Tiefenschärfe eingesetzt werden.

Das zu erfassende Schattenbild kann, insbesondere bei kleinen Gegenständen, der Schatten sein, den der beleuchtete Gegenstand unmittelbar auf dem Detektor, bzw, den Detektoren der Detektionseinrichtung erzeugt, beispielsweise auf den Photozellen einer Digitalkamera. Besonders bevorzugt wird der Schatten jedoch auf einer Projektionsfläche erzeugt und der auf der Projektionsfläche erzeugte Schatten von der Detektionseinrichtung erfaßt.

In einer bevorzugten Ausführungsform des erfindungsgemäßen Verfahrens kann vorgesehen sein, die ermittelten Ist-Werte für die Form des Gegenstands mit entsprechenden Soll-Werten zu vergleichen und daraus Handlungsanweisungen für die Herstellung weiterer Gegenstände mit denselben Soll-Werten abzuleiten. Diese Handlungsanweisungen können in einfacher Form beispielsweise zu einer Einteilung der vermessenen Gegenstände in Gutteile und Schlechtteile führen. Andere Handlungsanweisungen können Anweisungen beinhalten, wie eine Herstellungsvorrichtung für die Gegenstände hinsichtlich der Herstellungsparameter eingestellt werden sollte, um bei der Herstellung der weiteren Gegenstände die geforderten Soll-Werte zu erreichen.

Besonders bevorzugt kann vorgesehen sein, die Handlungsanweisungen an die Herstellungsvorrichtung für die Gegenstände zu übertragen und zu einer automatischen Korrektur der Herstellungsparameter heranzuziehen.

Bei der Ableitung der Handlungsanweisungen kann vorgesehen sein, die dreidimensionale Form des Gegenstands durch Softwaremittel zu vereinfachen, und auf relevante Formparameter zu reduzieren. Beispielsweise kann bei der Herstellung von gebogenen Rohren lediglich die Länge einzelner ungebogener Abschnitte sowie die Biegewinkel und -radien und die Verdrehwinkel zwischen zwei benachbarten ungebogenen Abschnitten für die Qualitätskontrolle und/oder eine Nachjustierung der Biegevorrichtung relevant sein, so dass (nur) diese Werte ausgegeben oder an die Biegevorrichtung übertragen werden können.

Die erfindungsgemäße Vorrichtung beziehungsweise das erfindungsgemäße Verfahren eignen sich besonders für eine Vermessung von Gegenständen, die einen konstanten Querschnitt aufweisen. Besonders vorteilhaft können Gegenstände mit einem kreisförmigen oder ovalen bzw. elliptischen Querschnitt, wie beispielsweise (gebogene) Rohre, Draht (auch Drahtgitter), Profile, etc. vermessen werden. In Abhängigkeit von der Anzahl der Lichtquellen, deren räumlicher Verteilung um den zu vermessenden Gegenstand und dem Erfassungsbereich bzw. der Anzahl der Detektionseinrichtungen können aber auch Gegenstände mit beliebiger Form bzw. Querschnitt vermessen werden. Insbesondere bei besonders komplex geformten Gegenständen kann es auch sinnvoll sein, den Gegenstand durch Drehen nacheinander von mehreren Seiten zu beleuchten; hierzu kann eine entsprechende Haltevorrichtung vorgesehen werden, die beispielsweise mittels eines drehbaren Haltearms die Drehung des Gegenstands ermöglicht.

Die erfindungsgemäße Vorrichtung beziehungsweise das erfindungsgemäße Verfahren können auch vorteilhafterweise im Bereich des "Reverse Engineering" eingesetzt werden, um dreidimensionale Computermodelle von Gegenständen zu erzeugen.

Ein besonderer Vorteil der erfindungsgemäßen Vorrichtung bzw. des erfindungsgemäßen Verfahrens liegt darin, dass, durch die optische Detektion von Schattenbildern des Gegenstands und nicht des Gegenstands selbst, Gegenstände aus beliebigen Werkstoffen, wie beispielsweise Metallen, Kunststoffen, Holz, etc. und insbesondere auch aus durchsichtigen Werkstoffen, wie beispielsweise Glas (z.B: Glasrohre), vermessen werden können. Von besonderem Vorteil ist, dass auch hochglänzende Metalle vermessen werden können.

Erfindungsgemäß kann die Vorrichtung zusätzlich zu der Detektionseinrichtung, die die Schattenbilder erfasst, noch mit einer Detektionseinrichtung ausgerüstet sein, die den Gegenstand direkt erfasst und dadurch beispielsweise die Oberflächenbeschaffenheit des Gegenstands ermittelt.

Für eine Kalibrierung der erfindungsgemäßen Vorrichtung, d.h. insbesondere eine Bestimmung der Relativposition der Lichtquellen zu der Detektionseinrichtung kann auf bereits vermessene Referenzgegenstände zurückgegriffen werden.

Die Erfindung wird nachfolgend anhand eines in den Zeichnungen dargestellten Ausführungsbeispiels erläutert.

In den Zeichnungen zeigt:
- Fig. 1:: eine erfindungsgemäße Vorrichtung in einer isometrischen Ansicht; und
- Fig._2:: schematisch den optischen Strahlengang bei der Vorrichtung gemäß Fig. 1.

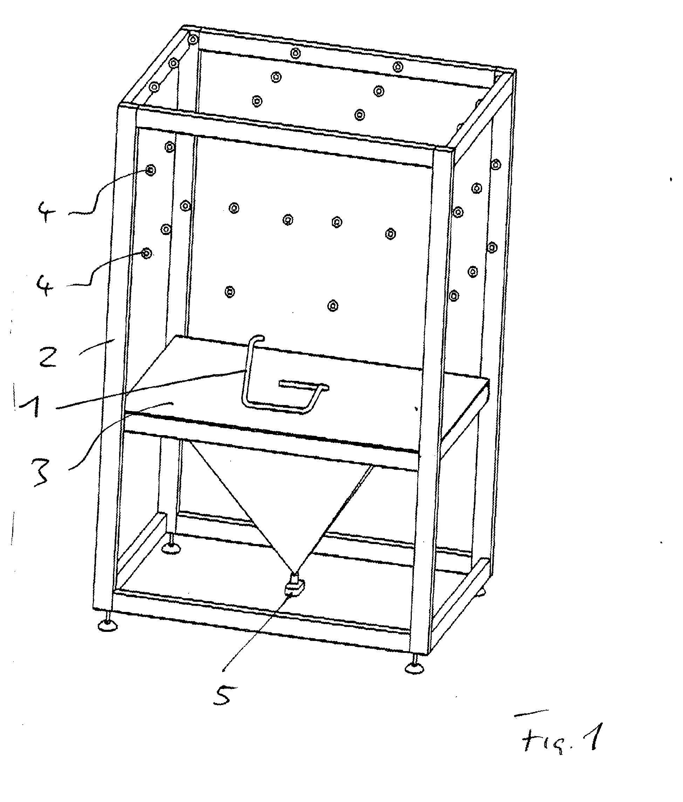

Die Fig. 1 zeigt eine erfindungsgemäße Vorrichtung zum Vermessen der Form eines dreidimensional geformten Gegenstands. Bei diesem Gegenstand handelt es sich um ein dreidimensional gebogenes Rohr 1.

Die Vorrichtung umfasst einen quaderförmigen Rahmen 2, der mit offenen Seitenwänden dargestellt ist, im Betrieb jedoch mit nicht dargestellten Boden- und Deckenelementen sowie Seitenwänden verschlossen werden kann, die während der Vermessungen des Rohrs 1 einen Einfall von Streulicht weitgehend verhindern. Relativ zentral innerhalb des von dem Rahmen 2 ausgebildeten Volumens ist eine horizontal ausgerichtete, optisch teiltransparente Projektionsfläche 3 vorgesehen, die aus Milchglas besteht. Die Projektionsfläche dient gleichzeitig als Ablage für das zu vermessende Rohr 1. Oberhalb der Projektionsfläche 3 sind eine Vielzahl von LED-Leuchten 4 vorgesehen, die an definierten Positionen an dem Rahmen 2, dem Deckenelement und den Seitenwänden der Vorrichtung befestigt sind. Unterhalb der Projektionsfläche 3 befindet sich eine handelsübliche Digitalkamera 5, die so ausgerichtet ist, dass sie ein Bild von der Unterseite der Projektionsfläche 3 (bzw. eines zentralen Ausschnitts hiervon) aufnimmt.

Die erfindungsgemäße Vorrichtung umfasst weiterhin eine nicht dargestellte Rechnereinheit, die zum einen jede der LED-Leuchten 4 ansteuern und dadurch aktivieren kann sowie zum anderen die von der Digitalkamera 5 gemachten Bilder auswertet und daraus die dreidimensionale Form des Rohrs 1 berechnet und ein entsprechendes CAD-Modell erzeugt.

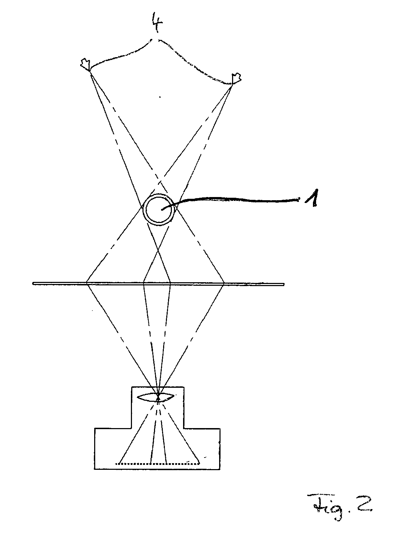

Eine Vermessung des auf der Projektionsfläche 3 abgelegten Rohrs 1 erfolgt dadurch, dass die einzelnen LED-Leuchten 4 mittels der Rechnereinheit nacheinander in einer beliebigen Reihenfolge angesteuert und aktiviert werden, wodurch diese blitzartig aufleuchten. Durch die Aktivierung einer LED-Leuchte 4 wird auf der Projektionsfläche 3 ein Schattenbild des Rohrs 1 erzeugt (vgl. Fig. 2, beispielhaft dargestellt für zwei gleichzeitig aktivierte LED-Leuchten 4). Die in unterschiedlichen Relativpositionen bezüglich des Rohrs 1 bzw. der Digitalkamera 5 angeordneten LED-Leuchten 4 erzeugen dabei unterschiedliche Schattenbilder. Jedes dieser Schattenbilder wird von der Digitalkamera 5 erfasst und an die Rechnereinheit übertragen. Dadurch, dass die Relativposition zwischen den einzelnen LED-Leuchten 4 und der Digitalkamera 5 bekannt ist, kann auf bekannte Art und Weise durch eine Interpolation aus den einzelnen Schattenbildern die dreidimensionale Form des Rohrs 1 ermittelt werden.

## Patentansprüche

1. Vorrichtung zum Vermessen der Form eines Gegenstands mit
- mindestens zwei Lichtquellen, die nacheinander aktiviert werden, um den Gegenstand zu beleuchten, und die sich bei ihrer Aktivierung in unterschiedlichen Relativpositionen zu dem Gegenstand befinden,
- mindestens einer optischen Detektionseinrichtung zum Erfassen der durch die Beleuchtung des Gegenstands erzeugten Schattenbilder und
- einer Rechnereinheit zum Berechnen der Form des Gegenstands aus den von der Detektionseinrichtung erfassten Schattenbildern.

2. Vorrichtung gemäß Anspruch 1, **dadurch gekennzeichnet, dass** die Lichtquellen und die Detektionseinrichtung auf gegenüberliegenden Seiten des Gegenstands angeordnet sind.

3. Vorrichtung gemäß Anspruch 2, **gekennzeichnet durch** eine optisch teiltransparente Projektionsfläche (3), die zwischen dem Gegenstand und der Detektionseinrichtung angeordnet ist.

4. Vorrichtung gemäß Anspruch 3, **dadurch gekennzeichnet, dass** die Projektionsfläche (3) als Ablage für den Gegenstand dient.

5. Vorrichtung gemäß Anspruch 4, **dadurch gekennzeichnet, dass** die Rechnereinheit Softwaremittel umfasst, die anhand des Gewichts des Gegenstands eine Verformung der Ablage und/oder des Gegenstands selbst aufgrund des Aufliegens des Gegenstands auf der Ablage bestimmen und bei der Berechnung der Form des Gegenstands berücksichtigen.

6. Vorrichtung gemäß einem der vorhergehenden Ansprüche, **dadurch gekennzeichnet, dass** die Lichtquellen in festen Relativpositionen bezüglich einer Ablage für den Gegenstand und/oder der Detektionseinrichtung angeordnet sind.

7. Vorrichtung gemäß einem der vorhergehenden Ansprüche, **gekennzeichnet durch** eine Messzelle mit einer zentral darin angeordneten Ablage für den Gegenstand, wobei die Detektionseinrichtung oberhalb oder unterhalb der Ablage und die Lichtquellen auf der gegenüberliegenden Seite hierzu angeordnet sind.

8. Vorrichtung gemäß Anspruch 7, **gekennzeichnet durch** eine Vielzahl von Lichtquellen, die an definierten Positionen an der Decke oder dem Boden und/oder den Seitenwänden eines Gehäuses der Messzelle angeordnet sind.

9. Vorrichtung gemäß einem der vorhergehenden Ansprüche, **gekennzeichnet durch** Lichtquellen in Form von LED-Leuchten (4).

10. Vorrichtung gemäß einem der vorhergehenden Ansprüche, **gekennzeichnet durch** eine Detektionseinrichtung in Form einer Digitalkamera (5).

11. Verfahren zum Vermessen der Form eines Gegenstands, wobei der Gegenstand nacheinander von mindestens zwei Lichtquellen, die sich in unterschiedlichen Relativpositionen zu dem Gegenstand befinden, beleuchtet wird und die sich **dadurch** ergebenden Schattenbilder mittels mindestens einer optischen Detektionseinrichtung erfasst werden und daraus die Form des Gegenstands berechnet wird.

12. Verfahren gemäß Anspruch 11, **dadurch gekennzeichnet, dass** die ermittelten Ist-Werte für die Form des Gegenstands mit entsprechenden Soll-Werten verglichen werden und daraus Handlungsanweisungen für die Herstellung weiterer Gegenstände mit denselben Soll-Werten abgeleitet werden.

13. Verfahren gemäß Anspruch 12, **dadurch gekennzeichnet, dass** die Handlungsanweisungen an eine Herstellungsvorrichtung für die Gegenstände übertragen werden und zu einer automatischen Korrektur von Herstellungsparametern herangezogen werden.
